(19) Europäisches Patentamt
European Patent Office
Office européen des brevets

(11) EP 3 521 370 A1

(12) **EUROPEAN PATENT APPLICATION**
published in accordance with Art. 153(4) EPC

(43) Date of publication:
**07.08.2019 Bulletin 2019/32**

(21) Application number: **17855821.9**

(22) Date of filing: **19.09.2017**

(51) Int Cl.:
***C08L 71/03*** *(2006.01)* ***C08G 65/333*** *(2006.01)*
***C08K 3/22*** *(2006.01)* ***H01B 1/12*** *(2006.01)*
***F16C 13/00*** *(2006.01)*

(86) International application number:
**PCT/JP2017/033712**

(87) International publication number:
**WO 2018/061866 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2016 JP 2016189631**

(71) Applicant: **Zeon Corporation**
**Tokyo 100-8246 (JP)**

(72) Inventor: **MESUDA, Ikuya**
**Tokyo 100-8246 (JP)**

(74) Representative: **Maiwald Patent- und Rechtsanwaltsgesellschaft mbH**
**Elisenhof**
**Elisenstraße 3**
**80335 München (DE)**

# (54) CROSSLINKABLE RUBBER COMPOSITION, CROSSLINKED RUBBER, AND ELECTROCONDUCTIVE MEMBER

(57) A cross-linkable rubber composition comprising a polyether rubber, a cross-linking agent, and calcium hydroxide is provided, the polyether rubber comprising 0.1 to 30 mol% of a unit represented by the following general formula (1) and 1 to 15 mol% of an unsaturated oxide monomer unit:

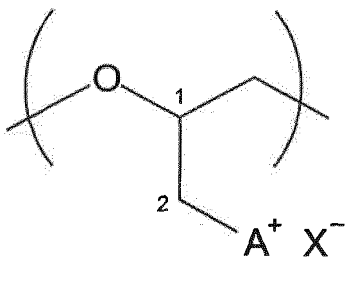

(1)

wherein $A^+$ is a group containing a cationic nitrogen-containing aromatic heterocyclic ring; the group containing a cationic nitrogen-containing aromatic heterocyclic ring bonds to a carbon atom at the position "2" shown in the above general formula (1) through one of nitrogen atoms constituting the cationic nitrogen-containing aromatic heterocyclic ring.

EP 3 521 370 A1

## Description

TECHNICAL FIELD

The present invention relates to a cross-linkable rubber composition, a cross-linked rubber prepared by cross-linking the cross-linkable rubber composition, and a conductive member comprising the cross-linked rubber.

BACKGROUND ART

In image-forming apparatuses such as printers, electronic photocopiers, and facsimile apparatuses, conductive members such as a conductive roll, a conductive blade, and a conductive belt have been used in the mechanisms where semiconductivity is required.

Various performances such as electroconductivity (electrical resistance and its variation, environmental dependency, and voltage dependency) within a desired range, contamination resistance, low hardness, and dimensional stability are required for such conductive members according to their applications.

Polyether rubber and the like where the rubber itself has semiconductivity have been used as a rubber constituting part of such conductive members. However, in recent years, higher speed has been demanded for the image-forming apparatus. Further lower electrical resistance has been desired for the conductive members, particularly the conductive rolls.

In regard to this, for example, Patent Document 1 discloses a technique of containing a unit of a monomer having onium ions introduced into a polyether rubber using a nitrogen atom-containing aromatic heterocyclic compound such as 1-methylimidazole as an onium-forming agent.

RELATED ART

PATENT DOCUMENTS

Patent Document 1: Japanese Patent Application Laid-Open No. 2014-70137

SUMMARY OF THE INVENTION

PROBLEM TO BE SOLVED BY THE INVENTION

The polyether rubber described in Patent Document 1 can reduce the electrical resistance value of the resulting cross-linked rubber in the case where a cross-linking agent is added to the polyether rubber to prepare a cross-linkable rubber composition and the cross-linkable rubber composition is cross-linked into a cross-linked rubber. In the case where the cross-linkable rubber composition is prepared by the technique according to Patent Document 1, however, scorching more readily occurs than with the polyether rubber conventionally used. For this reason, an improvement in scorching stability has been desired from the viewpoint of process workability.

The present invention has been made in consideration of such circumstances. An object of the present invention is to provide a cross-linkable rubber composition which has high scorching stability and sufficient cross-linkability, and can provide a cross-linked rubber having a reduced electrical resistance value. Another object of the present invention is to provide a cross-linked rubber and a conductive member which can be prepared using such a cross-linkable rubber composition.

MEANS FOR SOLVING THE PROBLEM

As a result of extensive research to achieve the object above, the present inventor has found that the object above can be achieved by a cross-linkable rubber composition comprising a polyether rubber, a cross-linking agent, and calcium hydroxide, the polyether rubber comprising a specific unit having a group containing a cationic nitrogen-containing aromatic heterocyclic ring and an unsaturated oxide monomer unit in a specific proportion, and thus has completed the present invention.

That is, the present invention provides a cross-linkable rubber composition comprising a polyether rubber, a cross-linking agent, and calcium hydroxide, the polyether rubber comprising 0.1 to 30 mol% of a unit represented by the following general formula (1) and 1 to 15 mol% of an unsaturated oxide monomer unit:

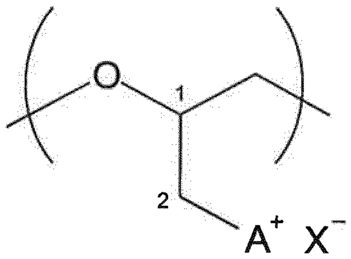

(1)

wherein $A^+$ is a group containing a cationic nitrogen-containing aromatic heterocyclic ring; the group containing a cationic nitrogen-containing aromatic heterocyclic ring bonds to a carbon atom at a position "2" shown in the above general formula (1) through one of nitrogen atoms constituting the cationic nitrogen-containing aromatic heterocyclic ring; and $X^-$ is any counter anion.

Preferably, the group containing a cationic nitrogen-containing aromatic heterocyclic ring represented by $A^+$ in the above general formula (1) is a group represented by the following general formula (2):

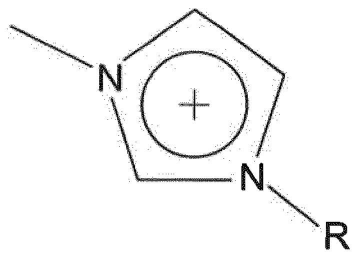

(2)

wherein N- shown in the general formula (2) bonds to the carbon atom at the position "2" shown in the above general formula (1); and R shown in the above general formula (2) represents a hydrogen atom or a hydrocarbon group having 1 to 20 carbon atoms.

Preferably, the polyether rubber further comprises an epihalohydrin monomer unit.

Preferably, the polyether rubber further comprises an ethylene oxide monomer unit.

Preferably, the cross-linking agent is a sulfur-containing compound.

Preferably, the content of the calcium hydroxide is 0.01 to 15 parts by weight with respect to 100 parts by weight of the polyether rubber.

Preferably, the Mooney viscosity (ML1+4, 100°C) is 10 to 53.

Preferably, the cross-linkable rubber composition is prepared by adding and kneading the cross-linking agent and the calcium hydroxide to and with the polyether rubber.

The present invention can also provide a method of producing the cross-linkable rubber composition, comprising: a step of preparing the polyether rubber, and a step of adding and kneading the cross-linking agent and the calcium hydroxide to and with the polyether rubber.

The present invention also provides a cross-linked rubber prepared by cross-linking the cross-linkable rubber composition.

Furthermore, the present invention provides a conductive member comprising the cross-linked rubber.

## EFFECTS OF INVENTION

The present invention can provide a cross-linkable rubber composition which has high scorching stability and sufficient cross-linkability, and can provide a cross-linked rubber having a reduced electrical resistance value, and a cross-linked rubber and a conductive member prepared using the cross-linkable rubber composition.

## DESCRIPTION OF EMBODIMENTS

The cross-linkable rubber composition according to the present invention comprises a polyether rubber, a cross-linking agent, and calcium hydroxide, the polyether rubber comprising 0.1 to 30 mol % of a unit represented by the general formula (1) which is described later, and 1 to 15 mol % of an unsaturated oxide monomer unit.

<Polyether Rubber>

The polyether rubber used in the present invention comprises at least 0.1 to 30 mol% of a unit represented by the general formula (1), and 1 to 15 mol% of an unsaturated oxide monomer unit:

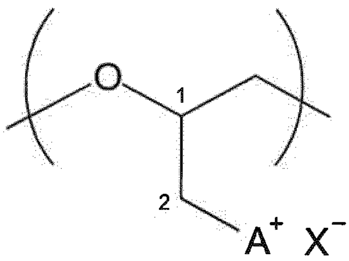

(1)

wherein $A^+$ is a group containing a cationic nitrogen-containing aromatic heterocyclic ring; the group containing a cationic nitrogen-containing aromatic heterocyclic ring bonds to a carbon atom at the position "2" shown in the above general formula (1) through one of nitrogen atoms constituting the cationic nitrogen-containing aromatic heterocyclic ring; and $X^-$ is any counter anion.

In the unit represented by the above general formula (1), $A^+$ is a group containing a cationic nitrogen-containing aromatic heterocyclic ring. This group containing a cationic nitrogen-containing aromatic heterocyclic ring bonds to the carbon atom at the position "2" shown in the above general formula (1) through one of the nitrogen atoms constituting the cationic nitrogen-containing aromatic heterocyclic ring. Any nitrogen-containing aromatic heterocyclic ring having a nitrogen atom in its ring and having an aromatic nature can be used in the cationic nitrogen-containing aromatic heterocyclic ring in the group containing a cationic nitrogen-containing aromatic heterocyclic ring without limitation. For example, the heterocyclic ring may have a nitrogen atom other than the nitrogen atom bonding to the carbon atom at the position "2" shown in the above general formula (1), may have a heteroatom other than the nitrogen atom, such as an oxygen atom or a sulfur atom, or may have the constitutional atoms of the heterocyclic ring partially substituted by a substituent. Alternatively, the heterocyclic ring may have a polycyclic structure of two or more rings condensed. Examples of such a structure of the nitrogen-containing aromatic heterocyclic ring include five-membered heterocyclic rings such as an imidazole ring, a pyrrole ring, a thiazole ring, an oxazole ring, a pyrazole ring, and an isooxazole ring; six-membered heterocyclic rings such as a pyridine ring, a pyrazine ring, a pyrimidine ring, a pyridazin ring, and a triazine ring; condensed heterocyclic rings such as a quinoline ring, an isoquinoline ring, a quinoxaline ring, a quinazoline ring, a cinnoline ring, a purine ring, an indole ring, an isoindole ring, a benzimidazole ring, a benzooxazole ring, and a benzoisooxazole ring; and the like. Among these heterocyclic rings, five-membered heterocyclic rings and six-membered heterocyclic rings are preferred, and an imidazole ring is more preferred. In the polyether rubber, the groups represented by $A^+$ in the unit represented by the general formula (1) each are independent. Two or more groups containing a cationic nitrogen-containing aromatic heterocyclic ring may be presented in the polyether rubber.

The nitrogen-containing aromatic heterocyclic ring can have any substituent without limitation. Examples of the substituent include an alkyl group; a cycloalkyl group; an alkenyl group; an aryl group; an arylalkyl group; an alkylaryl group; an alkoxyl group; an alkoxyalkyl group; an aryloxygroup; an alkanol group; a hydroxyl group; a carbonyl group; an alkoxycarbonyl group; an amino group; an imino group; a nitrile group; an alkylsilyl group; a halogen atom; and the like.

In the present invention, the group containing a cationic nitrogen-containing aromatic heterocyclic ring represented by $A^+$ in the above general formula (1) is preferably a group represented by the following general formula (2):

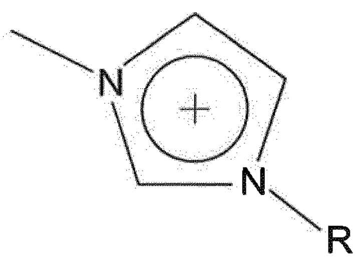

(2)

wherein N- shown in the above general formula (2) bonds to the carbon atom at the position "2" shown in the above general formula (1); and R shown in the general formula (2) represents a hydrogen atom or a hydrocarbon group having 1 to 20 carbon atoms.

R shown in the general formula (2) is preferably an alkyl group having 1 to 10 carbon atoms, more preferably a methyl group.

The content proportion of the unit represented by the above general formula (1) contained in the polyether rubber used in the present invention is 0.1 to 30 mol%, preferably 0.5 to 25 mol%, more preferably 0.7 to 12 mol% of the total monomer units. A content proportion of the unit represented by the above general formula (1) within this range attains a polyether rubber which can provide a cross-linked rubber having a small compression set and a low electrical resistance value. In contrast, an excessively low content proportion of the unit represented by the above general formula (1) may increase the volume resistivity value of the resulting cross-linked rubber. An excessively high content proportion of the unit represented by the above general formula (1) may harden the polyether rubber, losing the characteristics of a rubber elastic body in some cases.

The unit represented by the above general formula (1) is usually obtained by replacing at least part of the halogen atoms constituting the epihalohydrin monomer unit in the polyether rubber containing the epihalohydrin monomer unit with the group containing a cationic nitrogen-containing aromatic heterocyclic ring.

Examples of the epihalohydrin monomer constituting the epihalohydrin monomer unit include, but are not parcitularly limited to, epichlorohydrin, epibromohydrin, epiiodohydrin, epifluorohydrin, and the like. Among these epihalohydrin monomers, epichlorohydrin is preferred. The epihalohydrin monomers may be used singly, or two or more thereof may be used together. The epihalohydrin monomer unit is formed into the unit represented by the above general formula (1) by replacing at least part of the halogen atom with the group containing a cationic nitrogen-containing aromatic heterocyclic ring. The remaining part may be left without being replaced with the group containing a cationic nitrogen-containing aromatic heterocyclic ring.

Any nitrogen atom-containing aromatic heterocyclic compound can be used as the compound (hereinafter, referred to as "onium-forming agent") for replacing at least part of the halogen atom constituting the epihalohydrin monomer unit in the polyether rubber with the group containing a cationic nitrogen-containing aromatic heterocyclic ring without limitation. Examples thereof can include five-membered heterocyclic compounds such as imidazole, 1-methylimidazole, pyrrole, 1-methylpyrrole, thiazole, oxazole, pyrazole, and isooxazole; six-membered heterocyclic compounds such as pyridine, pyrazine, pyrimidine, pyridazin, triazine, and 2,6-lutidine; condensed heterocyclic compounds such as quinoline, isoquinoline, quinoxaline, quinazoline, cinnoline, purine, indole, isoindole, benzimidazole, benzooxazole, and benzoisooxazole; and the like. Among these compounds, five-membered heterocyclic compounds and six-membered heterocyclic compounds are preferred, and 1-methylimidazole is more preferred from the viewpoint of the substance stability after the reaction.

The method of replacing at least part of the halogen atom constituting the epihalohydrin monomer unit in the polyether rubber with the group containing a cationic nitrogen-containing aromatic heterocyclic ring (hereinafter, referred to as "onium ion-containing group" in some cases) is the application of a known onium-forming reaction. Such a known onium-forming reaction is disclosed in Japanese Patent Laid-Open No. 50-33271, Japanese Patent Laid-Open No. 51-69434, and Japanese Patent Laid-Open No. 52-42481 and the like.

Examples of the method of replacing at least part of the halogen atom constituting the epihalohydrin monomer unit in the polyether rubber with the group containing a cationic nitrogen-containing aromatic heterocyclic ring with the onium ion-containing group include a method of performing such replacement by mixing the onium-forming agent described above with the polyether rubber containing the epihalohydrin monomer unit to react the onium-forming agent with the epihalohydrin monomer unit; and the like. The onium-forming agent can be mixed with the polyether rubber by any mixing method. Examples thereof include a method of mixing these materials through a solvent using the solvent, and a method of mixing these materials substantially through no solvent, and the like. Among these methods, preferred is the method of mixing these materials substantially through no solvent because the onium-forming reaction can readily progress to shorten the reaction time.

Examples of such a method of mixing these materials substantially through no solvent include a method of kneading and reacting a polyether rubber containing an epihalohydrin monomer unit with an onium-forming agent substantially through no solvent, and the like. It should be noted that in this specification, "onium-forming reaction is performed substantially through no solvent" indicates that a solvent may be used to an extent that the polyether rubber containing the epihalohydrin monomer unit can be mixed with the onium-forming agent, rather than that the onium-forming reaction is performed without using any solvent at all.

The polyether rubber containing the epihalohydrin monomer unit can be kneaded with the onium-forming agent by any method. Preferably, the materials are homogeneously mixed by one or a combination of any dry kneaders such as kneaders, Banburies, open roll mills, calender rolls, and twin screw kneaders.

Furthermore, the onium-forming reaction between the polyether rubber containing the epihalohydrin monomer unit and the onium-forming agent may be performed simultaneously with the kneading, or may be separately performed after the kneading. If the reaction is separately performed, any dry kneader described above may be continuously used as it is, or the reaction may be performed using a heater such as an oven or a press forming machine.

The reaction temperature is 40 to 200°C, preferably 60 to 190°C, more preferably 80 to 180°C. At an excessively

low reaction temperature, the substitution reaction would not progress. In contrast, at an excessively high reaction temperature, the polyether rubber might decompose or the onium-forming agent might volatilize. The reaction time is not limited in particular, and is usually 1 minute to 10 days, preferably 5 minutes to 1 day. An excessively short reaction time might cause an imperfect substitution reaction. In contrast, an excessively long reaction time might cause the decomposition of the polyether rubber.

On the other hand, in the method of mixing using the solvent, the polyether rubber containing the epihalohydrin monomer unit can be mixed with the onium-forming agent by any method. Examples of such a method include a method of adding and mixing the onium-forming agent to and with a solution prepared by dissolving the polyether rubber in a solvent, a method of adding and mixing the polyether rubber to and with a solution prepared by dissolving the onium-forming agent in a solvent, a method of dissolving both the onium-forming agent and the polyether rubber in solvents to prepare solutions, respectively, and mixing the solutions with each other, and the like. The polyether rubber and the onium-forming agent may be dispersed in the solvents. The polyether rubber and the onium-forming agent may be dissolved or dispersed in the solvents.

Inactive solvents are suitably used as the solvent, and may be nonpolar or polar solvents. Examples of nonpolar solvents include aromatic hydrocarbons such as benzene and toluene; linear saturated hydrocarbons such as n-pentane and n-hexane; alicyclic saturated hydrocarbons such as cyclopentane and cyclohexane; and the like. Examples of polar solvents include ethers such as tetrahydrofuran, anisole, and diethyl ether; esters such as ethyl acetate and ethyl benzoate; ketones such as acetone, 2-butanone, and acetophenone; aprotic polar solvents such as acetonitrile, dimethylformamide, and dimethyl sulfoxide; protic polar solvents such as ethanol, methanol, and water; and the like. Mixed solvents of these solvents are suitably used. The solvent can be used in any amount. The amount thereof is used in such an amount that the concentration of the polyether rubber containing the epihalohydrin monomer unit is preferably 1 to 50% by weight, more preferably 3 to 40% by weight.

If the solvent is used, the reaction temperature is preferably 20 to 170°C, and the reaction time is preferably 1 minute to 500 hours.

The onium-forming agent can be used in any amount. The amount thereof may be determined according to the structures of the onium-forming agent and the polyether rubber to be used, the rate of replacement with the onium ion-containing group in the target polyether rubber, and the like. Specifically, the amount of the onium-forming agent to be used is in the range of usually 0.01 to 100 moles, preferably 0.02 to 50 moles, more preferably 0.03 to 10 moles, still more preferably 0.05 to 2 moles with respect to 1 mole of halogen atom constituting the epihalohydrin monomer unit to be used. An excessively small amount of the onium-forming agent might delay the substitution reaction, and a polyether rubber comprising a desired composition and having an onium ion-containing group (hereinafter, also referred to as "cationized polyether rubber") might not be obtained. An excessively large amount of the onium-forming agent might lead to difficulties in removing an unreacted onium-forming agent from the resulting cationized polyether rubber.

If cyclic secondary amines such as pyrrole (in the present invention, the cyclic secondary amines indicate nitrogen atom-containing aromatic heterocyclic compounds in which one hydrogen atom bonds to a nitrogen atom in the ring. The same is true below.) are used as the onium-forming agent, the amount of the onium-forming agent to be used is in the range of usually 0.01 to 2 moles, preferably 0.02 to 1.5 moles, more preferably 0.03 to 1 mole with respect to 1 mole of halogen atom constituting the epihalohydrin monomer unit to be used. An excessively small amount of cyclic secondary amines might delay the substitution reaction, and a cationized polyether rubber comprising a desired composition might not be obtained. In contrast, an excessively large amount of cyclic secondary amines might cause difficulties in control of the rate of replacement with the onium ion-containing group in the cationized polyether rubber due to influences by unreacted cyclic secondary amines which are used in an excess amount to the halogen atom.

Subsequently, the hydrogen atom bonding to the nitrogen atom in the ring bonding to the carbon atom at the position "2" shown in the above general formula (1) can also be replaced with a desired group when necessary. A desired substituent can be introduced by reacting the polyether rubber with the cyclic secondary amines, mixing a base with the reaction product to remove the proton bonding to the nitrogen atom, and then mixing a halogenated alkyl, for example, to add the halogenated alkyl to the reaction product as shown in the following general formula (3)

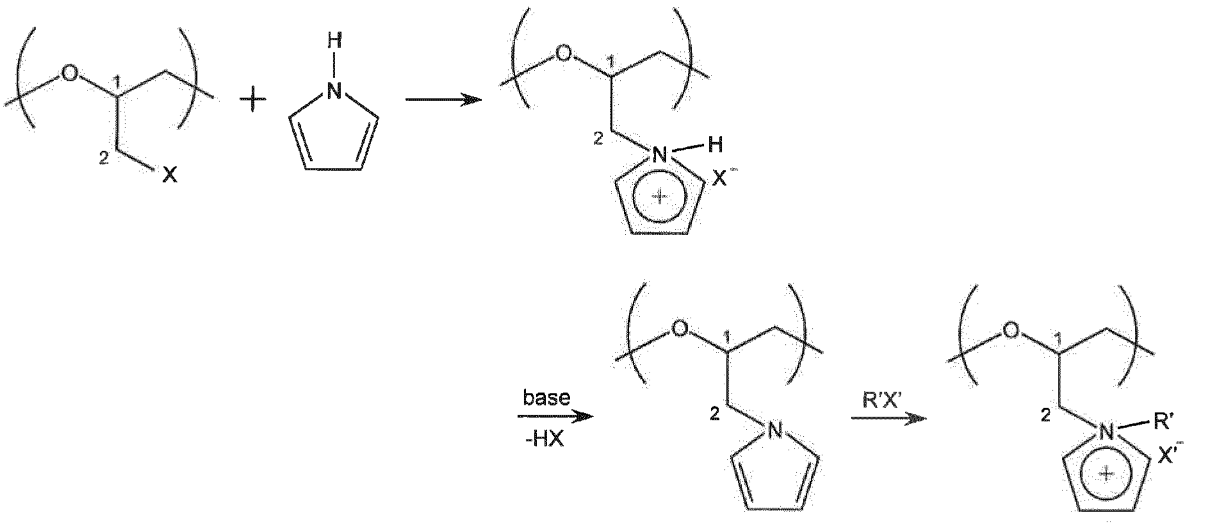


(3)

wherein R' represents an alkyl group having 1 to 10 carbon atoms, and X' represents a halogen atom.

Any counter anion represented by $X^-$ in the above general formula (1) is a compound or atom which bonds to $A^+$ through an ionic bond and has negative charge. Such a counter anion is not particularly limited except that it has negative charge. Because the counter anion bonds through an ionizing ionic bond, at least part thereof can be anion-exchanged for any counter anion through a known ion exchange reaction. X in the above general formula (1) is a halogen atom at the state where the onium-forming agent is mixed with the polyether rubber containing the epihalohydrin monomer unit and the reaction is completed. Here, the halide ion, which is the counter anion of $A^+$, may be subjected to a known anion exchange reaction. The anion exchange reaction can be performed by mixing an ionic compound having ionizing properties with the polyether rubber having the onium ion-containing group. The anion exchange reaction can be performed on any condition. The condition may be determined according to the structures of the ionic compound and the polyether rubber to be used, the rate to replace the counter anion of $A^+$, and the like. The reaction may be performed using only the ionic compound and the polyether rubber having an onium ion-containing group, or may be performed using other compounds such as an organic solvent in addition thereto. The ionic compound can be used in any amount. The amount is in the range of usually 0.01 to 100 moles, preferably 0.02 to 50 moles, more preferably 0.03 to 10 moles with respect to 1 mole of halogen atom constituting the epihalohydrin monomer unit to be used. An excessively small amount of the ionic compound might cause difficulties in progression of the substitution reaction. In contrast, an excessively large amount of the ionic compound might cause difficulties in removal of the ionic compound.

The pressure during the anion exchange reaction is usually 0.1 to 50 MPa, preferably 0.1 to 10 MPa, more preferably 0.1 to 5 MPa. The reaction temperature is usually -30 to 200°C, preferably -15 to 180°C, more preferably 0 to 150°C. The reaction time is usually 1 minute to 1000 hours, preferably 3 minutes to 100 hours, more preferably 5 minutes to 10 hours, still more preferably 5 minutes to 3 hours.

Any anion species in the counter anion can be used. Examples thereof include halide ions such as fluoride ions, chloride ions, bromide ions, and iodide ions; sulfate ions; sulfite ions; hydroxide ions; carbonate ions; hydrogencarbonate ions; nitrate ions; acetate ions; perchlorate ions; phosphate ions; alkyloxyions; trifluoromethanesulfonate ions; bis(trifluoromethane sulfone)imide ions; hexafluorophosphate ions; tetrafluoroborate ions; and the like.

The content proportion of the unit represented by the above general formula (1) contained in the polyether rubber used in the present invention (hereinafter, also referred to as "content ratio of the onium ion unit") can be determined by a known method. To simply and quantitatively determine the content ratio of the onium ion unit, the polyether rubber used in the present invention is subjected to $^1$H-NMR measurement. Thereby, the content of the onium ion-containing group can be quantitated. Specifically, the molar amount B1 of the total monomer unit (including the onium ion unit) in the polymer is first calculated from the integrated value of the protons derived from the polyether chain, which is the main chain of the cationized polyether rubber. Next, the molar amount B2 of the introduced onium ion unit (the unit represented by the above general formula (1)) is calculated from the integrated value of the protons derived from the onium ion-containing group. The content ratio of the onium ion unit can be calculated from the following expression by dividing the molar amount B2 of the introduced onium ion unit (unit represented by the above general formula (1)) by the molar amount B1 of the total monomer units (including the onium ion unit) in the polymer:

$$\text{Content ratio of onium ion unit (mol\%)} = 100 \times B2/B1$$

If the onium-forming agent to be used is not consumed in any reaction other than the substitution reaction of the onium ion-containing group on the reaction condition described above, the molar amount of the consumed onium-forming agent is equal to the molar amount of the halogen atom replaced with the onium ion-containing group. For this reason, the content ratio of the onium ion unit can be also calculated from the following expression as follows: The molar amount of the consumed onium-forming agent is calculated by subtracting the molar amount A2 of the remaining onium-forming agent after the end of the reaction from the molar amount A1 thereof before the start of the reaction, and is divided by the molar amount P of the total monomer units in the polyether rubber before the reaction with the onium-forming agent (hereinafter, also referred to as "base polyether rubber"):

$$\text{Content ratio of onium ion unit (mol\%)} = 100 \times (A1 - A2)/P$$

The molar amount of the consumed onium-forming agent may be measured by a known measurement method. For example, the reaction rate can be measured with a gas chromatograph (GC) provided with a capillary column and a flame ionization detector (FID).

The polyether rubber used in the present invention comprises an unsaturated oxide monomer unit in addition to the unit represented by the above general formula (1). The unsaturated oxide monomer unit acts mainly as a cross-linkable monomer unit.

The unsaturated oxide monomer forming the unsaturated oxide monomer unit can be any compound containing at least one carbon-carbon unsaturated bond (excluding an aromatic carbon-carbon unsaturated bond) and at least one epoxy group in the molecule. Examples thereof include alkenyl glycidyl ethers such as allyl glycidyl ether and butenyl glycidyl ether; alkenyl epoxides such as 3,4-epoxy-1-butene, 1,2-epoxy-5-hexene, and 1,2-epoxy-9-decene; and the like. Among these compounds, alkenyl glycidyl ethers are preferred, and allyl glycidyl ether is more preferred. These unsaturated oxide monomers may be used singly, or two or more thereof may be used together. The content proportion of the unsaturated oxide monomer unit contained in the polyether rubber is 1 to 15 mol%, preferably 1 to 12 mol%, more preferably 2 to 10 mol%. An excessively low content proportion of the unsaturated oxide monomer unit may cause insufficient cross-linking, reducing the mechanical properties of the resulting cross-linked rubber. An excessively high content proportion of the unsaturated oxide monomer unit may readily cause gelation reaction (three-dimensional cross-linking reaction) in the polymer molecule or between polymer molecules during the polymerization reaction, reducing the formability.

As described above, the unit represented by the above general formula (1) is introduced in the polyether rubber used in the present invention usually by replacing at least part of the halogen atom constituting the epihalohydrin monomer unit in the polyether rubber comprising the epihalohydrin monomer unit by the group containing a cationic nitrogen-containing aromatic heterocyclic ring. In this case, part of the epihalohydrin monomer unit may be left as it is without being replaced with the group containing a cationic nitrogen-containing aromatic heterocyclic ring. The content proportion of the epihalohydrin monomer unit contained in this case is preferably 0 to 98.9 mol%, more preferably 10 to 78.5 mol%, particularly preferably 15 to 57.3 mol% in the total monomer units. A content proportion of the epihalohydrin monomer unit within this range can more appropriately reduce the volume resistivity value.

Preferably, the polyether rubber used in the present invention comprises an ethylene oxide monomer unit in addition to the monomer units described above from the viewpoint of low electrical resistance. The ethylene oxide monomer unit is a unit formed of an ethylene oxide monomer. The content proportion of the ethylene oxide monomer unit in the polyether rubber used in the present invention is preferably 0 to 90 mol%, more preferably 20 to 80 mol%, particularly preferably 40 to 75 mol%. A content proportion of the ethylene oxide monomer unit in the polyether rubber within this range can provide a polyether rubber having lower electrical resistance.

The polyether rubber used in the present invention may be a copolymer comprising units of other monomers copolymerizable with the monomers which form the monomer units described above, as needed. Among these units of other monomers, preferred are alkylene oxide monomer units excluding ethylene oxide. Examples of alkylene oxide monomers which form alkylene oxide monomer units, excluding ethylene oxide, include, but are not particularly limited to, linear or branched alkylene oxides such as propylene oxide, 1,2-epoxybutane, 1,2-epoxy-4-chloropentane, 1,2-epoxyhexane, 1,2-epoxyoctane, 1,2-epoxydecane, 1,2-epoxyoctadecane, 1,2-epoxyeicosane, 1,2-epoxyisobutane, and 2,3-epoxyisobutane; cyclic alkylene oxides such as 1,2-epoxycyclopentane, 1,2-epoxycyclohexane, and 1,2-epoxycyclododecane; glycidyl ethers having a linear or branched alkyl chain such as butyl glycidyl ether, 2-ethylhexyl glycidyl ether, 2-methyloctyl glycidyl ether, neopentyl glycol diglycidyl ether, decyl glycidyl ether, and stearyl glycidyl ether;

glycidyl ethers having an oxyethylene side chain such as ethylene glycol diglycidyl ether, diethylene glycol diglycidyl ether, and polyethylene glycol diglycidyl ether; and the like. Among these alkylene oxide monomers, linear alkylene oxides are preferred, and propylene oxide is more preferred. These alkylene oxide monomers may be used singly, or two or more thereof may be used together. The content proportion of the alkylene oxide monomer units excluding ethylene oxide in the polyether rubber is preferably 30 mol% or less, more preferably 20 mol% or less, still more preferably 10 mol% or less in the total monomer units. An excessively high content proportion of the alkylene oxide monomer units excluding ethylene oxide in the polyether rubber might increase the volume resistivity value of the resulting cross-linked rubber.

Examples of other copolymerizable monomers excluding the alkylene oxide monomers include, but are not particularly limited to, aryl epoxides such as styrene oxide and phenyl glycidyl ether; and the like. The content proportion of the other copolymerizable monomer units excluding the alkylene oxide monomers in the polyether rubber used in the present invention is preferably 20 mol% or less, more preferably 10 mol% or less, still more preferably 5 mol% or less in the total monomer units.

The base polyether rubber can be prepared by solution polymerization or solvent slurry polymerization through ring-opening polymerization of the monomers.

Any standard catalyst for polyether rubber polymerization can be used as the polymerization catalyst without limitation. Examples of the polymerization catalyst include a catalyst prepared by reacting water and acetylacetone with organic aluminum (Japanese Patent Publication No. 35-15797); a catalyst prepared by reacting phosphoric acid and triethylamine with triisobutylaluminum (Japanese Patent Publication No. 46-27534); a catalyst prepared by reacting an organic acid salt of diazabicycloundecene and phosphoric acid with triisobutylaluminum (Japanese Patent Publication No. 56-51171); a catalyst composed of a partial hydrolysate of aluminum alkoxide and an organic zinc compound (Japanese Patent Publication No. 43-2945); a catalyst composed of an organic zinc compound and polyhydric alcohol (Japanese Patent Publication No. 45-7751); a catalyst composed of dialkyl zinc and water (Japanese Patent Publication No. 36-3394); a catalyst composed of tributyltin chloride and tributyl phosphate (Japanese Patent No. 3223978); and the like.

Any inactive solvent can be used as a polymerization solvent without limitation. For example, aromatic hydrocarbons such as benzene and toluene; linear saturated hydrocarbons such as n-pentane and n-hexane; cyclic saturated hydrocarbons such as cyclopentane and cyclohexane; and the like are used. Among these solvents, use of aromatic hydrocarbons is preferred, and toluene is more preferred in the case of ring-opening polymerization by solution polymerization from the viewpoint of the solubility of the base polyether rubber.

The polymerization reaction temperature is preferably 20 to 150°C, more preferably 50 to 130°C. The polymerization can be performed in any mode such as a batch mode, a semi-batch mode, or a continuous mode.

The base polyether rubber may be of any copolymerization type, i.e., a block copolymerization rubber or a random copolymerization rubber. In particular, if ethylene oxide is used as the monomer, the random copolymer is preferred because it reduces the crystallinity of polyethylene oxide and barely impairs the rubber elasticity.

The base polyether rubber can be recovered from the solvent by any method, such as an appropriate combination of methods such as coagulation, filtration, dehydration, and drying. As a method of coagulating the base polyether rubber from the solution in which the base polyether rubber is dissolved, steam stripping as a normal method or precipitation using a poor solvent can be used for example. Examples of the method of filtrating the base polyether rubber from a slurry containing the base polyether rubber include a method using a sieve such as a rotary screen or a vibration screen as needed. Furthermore, examples of the method of dehydrating the base polyether rubber can include a method of dehydrating the base polyether rubber using a centrifuge; a roll, or a compression type dehydrator such as a Banbury type dehydrator, or a screw extruder type dehydrator. Furthermore, examples of the method of drying the base polyether rubber can include a method of using a dryer such as a kneader type dryer, an expander dryer, a hot air dryer, or a reduced pressure dryer; and the like. These methods and apparatuses may be each used either singly or in combinations of two or more.

The polyether rubber used in the present invention has a weight average molecular weight of preferably 200000 to 2000000, more preferably 400000 to 1500000. An excessively high weight average molecular weight might increase the Mooney viscosity, resulting in difficulties in forming. In contrast, an excessively low weight average molecular weight might reduce the compression set of the resulting cross-linked rubber.

The polyether rubber used in the present invention preferably has a Mooney viscosity of 10 to 120 (polymer Mooney viscosity·ML1+4, 100°C). An excessively high Mooney viscosity results in poor formability, and thus difficulties in forming in the application to the conductive member. Furthermore, swell (the diameter of the extruded product becomes larger than that of the die during extrusion forming) might occur, reducing the dimensional stability. In contrast, an excessively low Mooney viscosity might reduce the mechanical strength of the resulting cross-linked rubber.

<Cross-Linking Agent>

Any cross-linking agent which can cross-link the polyether rubber described above can be used in the present invention without limitation.

Examples of such a cross-linking agent include sulfurs such as powdered sulfur, precipitated sulfur, colloidal sulfur, insoluble sulfur, and highly dispersible sulfur; sulfur-containing compounds such as sulfur monochloride, sulfur dichloride, sulfur-containing morpholine compounds (such as 4,4'-dithiodimorpholine, 4,4'-tetrathiodimorpholine, and 4-morpholinyl morpholinodithioformate), thiourea compounds (such as trimethylthiourea, diethylthiourea, dibutylthiourea, dilaurylthiourea, diphenylthiourea, ethylenethiourea, and thiocarbanilide), 1,1'-dithiobis(hexahydro-2H-azepin-2-one), phosphorus-containing polysulfide, polymer polysulfides, and triazine compounds (such as s-triazine-2,4,6-trithiol); organic peroxides such as dicumyl peroxide and ditertiary butyl peroxide; quinone dioximes such as p-quinone dioxime and p,p'-dibenzoylquinone dioxime; organic polyvalent amine compounds such as triethylene tetramine, hexamethylenediamine carbamate, and 4,4'-methylene bis-o-chloroaniline; alkylphenol resins having a methylol group; and the like. Among these compounds, sulfur and sulfur-containing compounds are preferred because the scorching stability can be increased. Sulfur-containing compounds are more preferred. Sulfur monochloride, sulfur dichloride, sulfur-containing morpholine compounds, thiourea compounds, 1,1'-dithiobis(hexahydro-2H-azepin-2-one), phosphorus-containing polysulfides, and polymer sulfides are more preferred. Sulfur-containing morpholine compounds and thiourea compounds are still more preferred, and thiourea compounds are particularly preferred. These cross-linking agents may be each used either singly or in combinations of two or more.

The content of the cross-linking agent in the cross-linkable rubber composition according to the present invention is preferably 0.1 to 10 parts by weight, more preferably 0.2 to 7 parts by weight, still more preferably 0.3 to 5 parts by weight with respect to 100 parts by weight of the polyether rubber used in the present invention. A content of the cross-linking agent within this range can provide a cross-linked rubber having appropriate hardness while the cross-linked rubber can be obtained at a sufficient cross-linking rate.

<Calcium hydroxide>

The cross-linkable rubber composition according to the present invention also comprises calcium hydroxide in addition of the polyether rubber and the cross-linking agent described above. In the cross-linkable rubber composition according to the present invention, calcium hydroxide ($Ca(OH)_2$) acts as a cross-linking accelerator or a cross-linking acceleration aid. In the present invention, use of calcium hydroxide can provide a cross-linkable rubber composition which has high scorching stability while having sufficient cross-linkability, and additionally can reduce the electrical resistance value of the resulting cross-linked rubber. Particularly, according to the knowledge of the present inventors, the inventors have found that if calcium hydroxide is used as a cross-linking accelerator or a cross-linking acceleration aid instead of zinc oxide conventionally used, the cross-linkable rubber composition can have enhanced scorching stability, and the resulting cross-linked rubber can have reduced electrical resistance value. Thereby, the present inventors have completed the present invention. If calcium hydroxide is present during a reaction between an onium-forming agent and a base polyether rubber, calcium hydroxide might be deactivated by a side reaction, and thus the scorching stability might not be enhanced while sufficient cross-linkability is achieved. Accordingly, it is preferred in the method of producing the cross-linkable rubber composition according to the present invention that calcium hydroxide be further added to and kneaded with the polyether rubber prepared by the reaction, even if calcium hydroxide is present before the reaction. Namely, the cross-linkable rubber composition according to the present invention is preferably prepared by adding and kneading the cross-linking agent and the calcium hydroxide to and with the polyether rubber because the scorching stability is enhanced while sufficient cross-linkability is provided. The method of producing the cross-linkable rubber composition according to the present invention will be described later.

The content of calcium hydroxide in the cross-linkable rubber composition according to the present invention is preferably 0.01 to 15 parts by weight, more preferably 0.1 to 10 parts by weight, still more preferably 1 to 8 parts by weight with respect to 100 parts by weight of the polyether rubber used in the present invention. A content of calcium hydroxide within this range can more appropriately enhance the scorching stability while sufficient cross-linkability is imparted to the cross-linkable rubber composition, and also can more appropriately reduce the electrical resistance value of the resulting cross-linked rubber.

The cross-linkable rubber composition according to the present invention may comprise a compound which acts as a cross-linking accelerator or a cross-linking acceleration aid, other than calcium hydroxide. Examples thereof include sulfur-containing cross-linking accelerators containing a sulfur atom in the chemical structure, stearic acid, and the like.

Examples of the sulfur cross-linking accelerator containing a sulfur atom in the chemical structure include thiuram cross-linking accelerators, thiazole cross-linking accelerators, sulfenamide cross-linking accelerators, dithiocarbamate cross-linking accelerators, and the like.

Specific examples of the thiuram cross-linking accelerators include tetramethylthiuram monosulfide, tetramethylthiuram disulfide, tetraethylthiuram disulfide, tetrabutylthiuram disulfide, dipentamethylenethiuram tetrasulfide, and the like. Specific examples of thiazole cross-linking accelerators include 2-mercaptobenzothiazole, di-2-benzothiazolyl disulfide, zinc 2-mercaptobenzothiazole, (dinitrophenyl)mercaptobenzothiazole, (N,N-diethyldithiocarbamoyl)benzothiazole, and the like. Specific examples of the sulfenamide cross-linking accelerators include N-ethyl-2-benzothiazylsulfenamide, N-t-butyl-2-benzothiazylsulfenamide, N-oxydiethylene-2-benzothiazolylsulfenamide, N-cyclohexyl-2-benzothiazylsulfenamide, N,N-diisopropyl-2-benzothiazylsulfenamide, N,N-dicyclohexyl-2-benzothiazylsulfenamide, and the like. Specific examples of the dithiocarbamate cross-linking accelerators include lead dimethyldithiocarbamate, lead diamyldithiocarbamate, zinc dimethyldithiocarbamate, zinc diamyldithiocarbamate, zinc diethyldithiocarbamate, zinc dibutyldithiocarbamate, zinc dibenzyldithiocarbamate, zinc pentamethylenedithiocarbamate, zinc ethylphenyldithiocarbamate, sodium dimethyldithiocarbamate, sodium diethyldithiocarbamate, sodium dibutyldithiocarbamate, selenium dimethyldithiocarbamate, selenium diethyldithiocarbamate, tellurium diethyldithiocarbamate, cadmium diethyldithiocarbamate, copper dimethyldithiocarbamate, iron dimethyldithiocarbamate, bismuth dimethyldithiocarbamate, dimethylammonium dimethyldithiocarbamate, piperidine pentamethylenedithiocarbamate, pipecoline methylpentamethylenedithiocarbamate, and the like.

The content of the compound which acts as a cross-linking accelerator or a cross-linking acceleration aid other than calcium hydroxide in the cross-linkable rubber composition according to the present invention is preferably 0.01 to 15 parts by weight, more preferably 0.1 to 10 parts by weight, still more preferably 0.5 to 3 parts by weight with respect to 100 parts by weight of the polyether rubber used in the present invention. If the content of the compound which acts as a cross-linking accelerator or a cross-linking acceleration aid other than calcium hydroxide is controlled to be within this range, the cross-linkable rubber composition can have more enhanced cross-linkability while having a sufficient effect of improving the scorching stability.

Zinc oxide also acts as a cross-linking accelerator or a cross-linking acceleration aid. If zinc oxide is compounded, the scorching stability is reduced or the effect of reducing the electrical resistance value of the resulting cross-linked rubber is not achieved. For this reason, the content of zinc oxide in the cross-linkable rubber composition according to the present invention is limited to preferably 5 parts by weight or less, preferably 1 part by weight or less with respect to 100 parts by weight of the polyether rubber used in the present invention. Particularly preferably, zinc oxide is not substantially contained.

<Other Compounding Agents>

The cross-linkable rubber composition according to the present invention may further comprise a filler in addition to the components described above. Any filler can be used without limitation. Examples thereof include carbon black, silica, carbon nanotubes, graphene, and the like. These fillers may be each used either singly or in combinations of two or more. The filler can be compounded in any proportion. The proportion is preferably 0.01 to 150 parts by weight, more preferably 0.1 to 100 parts by weight, particularly preferably 1 to 60 parts by weight with respect to 100 parts by weight of the polyether rubber used in the present invention. Among these fillers, if a conductive filler such as carbon black, carbon nanotubes, or graphene is used, the compounding proportion is preferably 0.01 to 60 parts by weight, more preferably 0.1 to 40 parts by weight, particularly preferably 1 to 30 parts by weight with respect to 100 parts by weight of the polyether rubber used in the present invention.

The cross-linkable rubber composition according to the present invention may contain the followings in the range not impairing the effects of the present invention: diene rubbers such as butadiene rubber, styrene butadiene rubber, chloroprene rubber, isoprene rubber, natural rubber, acrylonitrile butadiene rubber, butyl rubber, and partially hydrogenated products of these rubbers (such as hydrogenated nitrile rubber); rubbers other than the diene rubbers such as ethylene propylene rubber, acrylic rubber, polyether rubber (excluding the polyether rubbers described above), fluorocarbon rubber, and silicone rubber; thermoplastic elastomers such as olefin thermoplastic elastomer, styrene thermoplastic elastomer, vinyl chloride thermoplastic elastomer, polyester thermoplastic elastomer, polyamide thermoplastic elastomer, and polyurethane thermoplastic elastomer; resins such as polyvinyl chloride, coumarone resin, phenol resin; and the like. These rubbers, thermoplastic elastomers, and resins may be used either singly or in combinations of two or more. The total content thereof is preferably 100 parts by weight or less, more preferably 70 parts by weight or less, particularly preferably 50 parts by weight or less with respect to 100 parts by weight of the polyether rubber used in the present invention. Among these rubbers, thermoplastic elastomers, and resins, acrylonitrile butadiene rubber is preferably contained because it can enhance the processability during preparation of the cross-linkable rubber composition, particularly, the processability during roll kneading.

Furthermore, the cross-linkable rubber composition according to the present invention may contain known other additives usually compounded in rubber in addition to the additives described above. Examples of such additives include, but are not particularly limited to, acid acceptors; reinforcing agents; antioxidants; UV absorbing agents; light stabilizers; tackifiers; surfactants; conductivity imparting materials; electrolyte materials; colorants (dyes and pigments); flame retardants; anti-static agents; and the like.

The cross-linkable rubber composition according to the present invention has a Mooney viscosity (compounded product Mooney viscosity·ML1+4, 100°C) is preferably 10 to 53, more preferably 15 to 50, still more preferably 25 to 50. A compounded product Mooney viscosity within this range can provide favorable formability.

The cross-linkable rubber composition according to the present invention can be prepared by blending and kneading the cross-linking agent, calcium hydroxide, and additives used when necessary with the polyether rubber described above by a desired method. For example, the cross-linkable rubber composition according to the present invention can be prepared by kneading the additives excluding the cross-linking agent, calcium hydroxide, and the compound which acts as a cross-linking accelerator or a cross-linking acceleration aid other than calcium hydroxide and is added when necessary, with a polyether rubber, and adding the cross-linking agent, calcium hydroxide, and the compound which acts as a cross-linking accelerator or a cross-linking acceleration aid other than calcium hydroxide and is added when necessary, with the mixture. During blending and kneading, these materials may be kneaded and formed using one or a combination of any kneading forming machines such as kneaders, Banburies, open roll mills, calender rolls, and extruders. During the kneading of the additives excluding cross-linking agent, calcium hydroxide, the compound which acts as a cross-linking accelerator or a cross-linking acceleration aid other than calcium hydroxide and is added when necessary, and the polyether rubber, the kneading temperature is preferably 20 to 200°C, more preferably 20 to 150°C, and the kneading time is preferably 30 seconds to 30 minutes. During the mixing of the kneaded product with the cross-linking agent, calcium hydroxide, and the compound which acts as a cross-linking accelerator or a cross-linking acceleration aid other than calcium hydroxide and is added when necessary, the mixing temperature is preferably 100°C or less, more preferably 0 to 80°C.

The method of production according to the present invention is a method of producing the cross-linkable rubber composition according to the present invention, comprising: a step of preparing the polyether rubber, and a step of adding and kneading the cross-linking agent and the calcium hydroxide to and with the polyether rubber. The step of preparing the polyether rubber may be a step of mixing the onium-forming agent with the polyether rubber comprising an epihalohydrin monomer unit to perform a reaction. Alternatively, this step may be performed in the presence of calcium hydroxide. In this case, the calcium hydroxide might be deactivated by a side reaction, not providing sufficient cross-linkability and high scorching stability. In the method of production according to the present invention, the polyether rubber is prepared through a reaction between the onium-forming agent and the base polyether rubber, and calcium hydroxide is added to the polyether rubber. For this reason, calcium hydroxide does not lose the activity in the cross-linkable rubber composition, and thus can enhance the scorching stability while providing sufficient cross-linkability.

<Cross-Linked Rubber>

The cross-linked rubber according to the present invention is prepared by cross-linking the cross-linkable rubber composition according to the present invention described above.

The cross-linkable rubber composition according to the present invention can be cross-linked by any method. The cross-linkable rubber may be cross-linked and simultaneously formed, or may be cross-linked after forming. The forming temperature is preferably 20 to 200°C, more preferably 40 to 180°C. The heating temperature during cross-linking is preferably 130 to 200°C, more preferably 140 to 200°C. An excessively low temperature during cross-linking might require a longer cross-linking time, or might reduce the cross-linking density of the cross-linked rubber. In contrast, an excessively high temperature during cross-linking might cause forming defects. The cross-linking time is preferably in the range of 1 minute or more and 5 hours or less from the viewpoint of the cross-linking density and the production efficiency, although it depends on the cross-linking method, the cross-linking temperature, the shape, and the like. The heating method may be appropriately from methods such as press heating, oven heating, steam heating, hot air heating, and microwave heating.

Secondary cross-linking may be performed by further heating depending on the shape, the size, and the like of the cross-linked rubber because the inside of the cross-linked rubber is not sufficiently cross-linked in some cases even if the surface there is cross-linked. The heating temperature for performing the secondary cross-linking is preferably 100 to 220°C, more preferably 130 to 210°C. The heating time is preferably 30 minutes to 5 hours.

The volume resistivity value of the cross-linked rubber according to the present invention is defined as a value measured 30 seconds after the start of the application of voltage in an environment at a temperature of 23°C, a humidity of 50%, and two applied voltages, i.e., 100 V and 250 V. The volume resistivity value is usually $1 \times 10^{5.0}$ to $1 \times 10^{9.5}$ $\Omega \cdot cm$, preferably $1 \times 10^{5.2}$ to $1 \times 10^{8.0}$ $\Omega \cdot cm$, more preferably $1 \times 10^{5.5}$ to $1 \times 10^{7.5}$ $\Omega \cdot cm$. A cross-linked rubber having a volume resistivity value within this range produces a conductive member having lower electrical resistance. In contrast, an excessively high volume resistivity value of the cross-linked rubber is not suitable for the conductive member because a higher voltage should be applied to cause the same amount of current to flow, and thus the power consumption should be increased. An excessively low volume resistivity value of the cross-linked rubber might cause the current to flow in an unintended direction other than the direction of the applied voltage, impairing the function as the conductive member.

The cross-linked rubber according to the present invention thus prepared has low electrical resistance value and can be suitably used in a variety of conductive applications because it is prepared from the cross-linkable rubber composition according to the present invention.

<Conductive Member>

The conductive member according to the present invention comprises the cross-linked rubber according to the present invention.

Utilizing the properties, the cross-linked rubber according to the present invention is useful as a material for a variety of industrial rubber products, and can be used in conductive members, such as conductive rolls, conductive blades, and conductive belts, used in copiers and printers; materials for shoe soles and hoses; materials for belts such as conveyor belts and hand rails for escalators; materials for seals and packings; and the like, for example. In particular, the cross-linked rubber according to the present invention can be suitably used in conductive members, and particularly, conductive rolls used in copiers and printer because it has low electrical resistance value.

EXAMPLES

The present invention will now be more specifically described by way of Examples and Comparative Examples. In Examples, "parts" is in terms of weight unless otherwise specified.

A variety of physical properties were evaluated according to the following methods.

[Content Ratio of Onium Ion Unit]

The content ratio of the onium ion unit in Examples was measured using a nuclear magnetic resonance apparatus ($^1$H-NMR) as follows. After the onium-forming reaction, coagulation and drying were performed to prepare a cationized polyether rubber, and 30 mg of the cationized polyether rubber was added to 1.0 ml of dimethyl sulfoxide, and was shaken for one hour to be homogeneously dissolved. This solution was subjected to $^1$H-NMR measurement, and the content ratio of the onium ion unit was calculated. First, the molar amount B1 of the total monomer units (including the onium ion unit) in the polymer was calculated from the integrated value of the protons derived from the polyether chain, which was the main chain of the cationized polyether rubber. Next, the molar amount B2 of the introduced onium ion unit (unit represented by the above general formula (1)) was calculated from the integrated value of the protons derived from the onium ion-containing group. The content ratio of the onium ion unit was then calculated from the following expression by dividing the molar amount B2 of the introduced onium ion unit (unit represented by the above general formula (1)) by the molar amount B1 of the total monomer units (including the onium ion unit) in the polymer:

$$\text{Content ratio of onium ion unit (mol\%)} = 100 \times B2/B1$$

[Compounded Product Mooney Viscosity (ML1+4, 100°C)]

The Mooney viscosity (compounded product Mooney viscosity, ML1+4, 100°C) of the cross-linkable rubber composition was measured at 100°C according to JIS K6300.

[Mooney Scorching Times ($t_5$ and $t_{35}$)]

The Mooney scorching times ($t_5$ and $t_{35}$) of the cross-linkable rubber composition were measured at 125°C using an L-shaped rotor according to JIS K6300. The Mooney scorching time ($t_5$) is the time during which the Mooney viscosity increases from the minimum value by 5 points, and the Mooney scorching time ($t_{35}$) is the time during the Mooney viscosity increases from the minimum value by 35 points. Higher values of the Mooney scorching times ($t_5$ and $t_{35}$) indicate higher scorching stability. The minimum Mooney viscosity (Vm) in the Mooney scorching test was also measured in this test.

[Cross-Linkability Test]

The cross-linkable rubber composition was subjected to a cross-linkability test using a rubber vulcanization tester (Moving Die Rheometer MDR, manufactured by Alpha Technologies Company) on the condition at 170°C for 20 minutes. From the result of the cross-linkability test, the minimum torque "ML" (unit: dN·m), the maximum torque "MH"

(unit: dN·m), T10 (unit: min.) and T90 (unit: min.) were measured. T10 and T90 indicate the time needed for the torque to 10% increase from the minimum torque ML and the time needed for the torque to 90% increase from the minimum torque ML, respectively, where "maximum torque MH-minimum torque ML" is 100%. It can be determined that a smaller value of T90 indicates a higher cross-linking rate.

[Volume Resistivity Value (23°C, 50%RH)]

The cross-linkable rubber composition was formed by pressing at a temperature of 170°C for 20 minutes, and cross-linked to yield a sheet-shaped cross-linked rubber (sheet-shaped test piece) having a length of 15 cm, a width of 10 cm, and a thickness of 2 mm. The resulting sheet-shaped cross-linked rubber was used to measure the volume resistivity value. The volume resistivity value was measured according to K6271 by a guarded-electrode system on the measurement condition at a temperature of 23°C, a humidity of 50%, and two applied voltages 100 V and 250 V. The value 30 seconds after the start of the application of the voltage was measured. A smaller numeric value of the volume resistivity value indicates higher conductivity.

(Production Example 1, Production of Polymerization Catalyst)

A pressure-resistant glass container was tightly closed, and was purged with nitrogen. 200 parts of toluene and 60 parts of triisobutylaluminum were fed. The glass container was immersed in iced water to be cooled. 230 parts of diethyl ether were added and stirred. In the next step, while the glass contained was being cooled with iced water, 13.6 parts of phosphoric acid were added, followed by further stirring. At this time, the glass container was appropriately depressurized because the internal pressure of the container was increased due to the reaction between triisobutylaluminum and phosphoric acid. The resulting reaction mixture was then subjected to an aging reaction in a hot water bath at 60°C for one hour to prepare a catalyst solution.

(Production Example 2, Production of Polyether Rubber)

223.5 parts of epichlorohydrin, 27.5 parts of allyl glycidyl ether, 19.7 parts of ethylene oxide and 2585 parts of toluene were placed into an autoclave, and the solution was heated to 50°C under a nitrogen atmosphere with stirring. 11.6 parts of the catalyst solution prepared above were added to initiate the reaction. In the next step, 129.3 parts of a solution of ethylene oxide dissolved in 302 parts of toluene were continuously added at an equal rate over 5 hours from the start of the reaction. 6.2 parts of the catalyst solution were added every 30 minutes after the start of the reaction over 5 hours. 15 parts of water were then added, and was stirred to complete the reaction. 45 parts of a 5% solution of 4,4'-thiobis-(6-tert-butyl-3-methylphenol) in toluene as an antioxidant were further added thereto, and stirred. Steam stripping was performed to remove toluene, and the supernatant was removed. The product was vacuum dried at 60°C to yield 400 parts of a polyether rubber. The result of $^1$H-NMR measurement showed that polyether rubber had the following monomer compositional ratio: the epichlorohydrin monomer unit: 40 mol%, the ethylene oxide monomer unit: 56 mol%, and allyl glycidyl ether monomer unit: 4 mol%. The resulting polyether rubber had a Mooney viscosity of 60 [ML1+4,100°C].

(Production Example 3, Production of Cationized Polyether Rubber)

100 parts of the polyether rubber yielded in Production Example 2 and 1.5 parts of 1-methylimidazole were placed into an open roll mill at 25°C, and were kneaded for 5 minutes. The mixture was heated to 100°C, and was set on a pressurized forming machine to perform a reaction for 24 hours. Subsequently, the cationized polyether rubber (yield: 101.5 parts) yielded by the reaction was recovered from the oven. The resulting cationized polyether rubber was subjected to $^1$H-NMR measurement according to the method described above, and the content ratio of the onium ion unit was calculated. The content ratio of the onium ion unit in the resulting cationized polyether rubber was 1.2 mol%. Namely, the resulting cationized polyether rubber had the following monomer compositional ratio: the epichlorohydrin monomer unit: 38.8 mol%, the ethylene oxide monomer unit: 56 mol%, onium ion unit (unit represented by the general formula (1)): 1.2 mol%, and allyl glycidyl ether monomer unit: 4 mol%. The resulting cationized polyether rubber had a Mooney viscosity of 54 [ML1+4,100°C].

[Example 1]

100 parts of the cationized polyether rubber prepared in Production Example 3, 2 parts of 4,4'-dithiodimorpholine (trade name "VULNOC R", manufactured by Ouchi Shinko Chemical Industrial Co., Ltd., sulfur-containing morpholine compound), 1 part of trimethylthiourea (trade name "NOCCELER TMU", manufactured by Ouchi Shinko Chemical Industrial Co., Ltd., thiourea cross-linking agent), 5 parts of calcium hydroxide, 20 parts of carbon black (trade name "Thermax N990", manufactured by Tokai Carbon Co., Ltd., MT carbon black, filler), and 1 part of stearic acid (cross-linking acceleration aid) were placed into an open roll mill at 40°C, and were kneaded and mixed for 10 minutes to prepare a cross-linkable rubber composition. Using the resulting cross-linkable rubber composition, the compounded product Mooney viscosity (ML1+4,100°C), the Mooney scorching times ($t_5$ and $t_{35}$), the minimum Mooney viscosity (Vm), the cross-linkability test, and the volume resistivity value were measured and evaluated according to the methods described above. The results are shown in Table 1.

[Example 2]

A cross-linkable rubber composition was yielded in the same manner as in Example 1 except that 4,4'-dithiodimorpholine was not used, and was evaluated in the same manner as in Example 1. The results are shown in Table 1.

[Example 3]

A cross-linkable rubber composition was prepared in the same manner as in Example 1 except that 0.5 parts of sulfur (trade name "SULFAX PMC, manufactured by Tsurumi Chemical Industry Co., Ltd. ") and 1 part of tetraethylthiuram disulfide (trade name "NOCCELER TET", manufactured by Ouchi Shinko Chemical Industrial Co., Ltd., thiuram cross-linking accelerator) were used instead of 2 parts of 4,4'-dithiodimorpholine and 1 part of trimethylthiourea. The results are shown in Table 1.

[Comparative Example 1]

A cross-linkable rubber composition was prepared in the same manner as in Example 1 except that 5 parts of zinc oxide (trade name "ZnO#1", manufactured by Seido Chemical Industry Co., Ltd.) were used instead of 5 parts of calcium hydroxide and the compounding amount of 4,4'-dithiodimorpholine was changed from 2 parts to 1 part, and the evaluation was performed in the same manner as in Example 1. The results are shown in Table 1.

[Comparative Example 2]

A cross-linkable rubber composition was prepared in the same manner as in Example 3 except that 5 parts of zinc oxide (trade name "ZnO#1", manufactured by Seido Chemical Industry Co., Ltd.) were used instead of 5 parts of calcium hydroxide, and the evaluation was performed in the same manner as in Example 3. The results are shown in Table 1.

[Table 1]

Table 1

| | | | Example | | | Comparative Example | |
|---|---|---|---|---|---|---|---|
| | | | 1 | 2 | 3 | 1 | 2 |
| Compounding of cross-linkable rubber composition | | | | | | | |
| | Cationized polyether rubber | (parts) | 100 | 100 | 100 | 100 | 100 |
| | Carbon black | (parts) | 20 | 20 | 20 | 20 | 20 |
| | Calcium hydroxide | (parts) | 5 | 5 | 5 | | |
| | Zinc oxide | (parts) | | | | 5 | 5 |
| | Stearic acid | (parts) | 1 | 1 | 1 | 1 | 1 |
| | 4,4'-Dithiodimorpholine | (parts) | 2 | | | 1 | |
| | Trimethylthiourea | (parts) | 1 | 1 | | 1 | |
| | Sulfur | (parts) | | | 0.5 | | 0.5 |

(continued)

| | | | Example | | | Comparative Example | |
|---|---|---|---|---|---|---|---|
| | | | 1 | 2 | 3 | 1 | 2 |
| Compounding of cross-linkable rubber composition | | | | | | | |
| | Tetraethylthiuramdisulfide (parts) | | | | 1 | | 1 |
| Results of evaluation | | | | | | | |
| | Compounded product Mooney viscosity (ML1+4, 100°C) | | 42 | 47 | 46 | 55 | 61 |
| | Scorching stability | | | | | | |
| | | Mooney scorching time $t_5$ (min.) | 10.6 | 17.8 | 10.0 | 5.8 | 4.1 |
| | | Mooney scorching time $t_{35}$ (min.) | >30 | >30 | 15.4 | 11.8 | 6.3 |
| | | Minimum Mooney viscosity Vm | 35 | 37 | 35 | 45 | 42 |
| | Cross-linkability test | | | | | | |
| | | Minimum torque ML (dN·m) | 0.86 | 0.97 | 1.18 | 1.05 | 1.27 |
| | | Maximum torque MH (dN·m) | 12.6 | 8.04 | 7.95 | 11.17 | 14.1 |
| | | $T_{10}$ (min.) | 1.87 | 2.31 | 0.81 | 1.17 | 0.92 |
| | | $T_{90}$ (min.) | 15.17 | 16.48 | 10.12 | 13.39 | 13.87 |
| | | MH-ML (dN·m) | 11.7 | 7.1 | 6.8 | 10.1 | 12.8 |
| | | $T_{90}$ - $T_{10}$ (min.) | 13.3 | 14.2 | 9.3 | 12.2 | 13.0 |
| | Volume resistivity | | | | | | |
| | | $\log_{10}$ (volume resistivity value) at 100 V | 6.7 | 6.3 | 6.3 | 6.9 | 6.7 |
| | | $\log_{10}$ (volume resistivity value) at 250 V | 6.7 | 6.3 | 6.3 | 6.9 | 6.8 |

In Table 1, ">30" in the Mooney scorching time $t_{35}$ indicates that the Mooney scorching time $t_{35}$ of 30 minutes or more.

As shown in Table 1, the cross-linkable rubber composition comprising the polyether rubber comprising the specific unit having a group containing a cationic nitrogen-containing aromatic heterocyclic ring and the unsaturated oxide monomer unit in a specific proportion, the cross-linking agent, and calcium hydroxide had a long Mooney scorching time ($t_5$) and a long Mooney scorching time ($t_{35}$), and had a low minimum Mooney viscosity (Vm). The cross-linkable rubber composition also had high scorching stability, and further has sufficient cross-linkability. The resulting cross-linked rubber had a low electrical resistance value (Examples 1 to 3).

In contrast, in the case where zinc oxide was used instead of calcium hydroxide, both of the Mooney scorching time ($t_5$) and the Mooney scorching time ($t_{35}$) were short, and the scorching stability was inferior (Comparative Examples 1 and 2).

From the results above, it can be verified that the effects of increasing both of the Mooney scorching time ($t_5$) and the Mooney scorching time ($t_{35}$) while providing sufficient cross-linkability, and reducing the electrical resistance value of the resulting cross-linked rubber have been achieved for the first time by compounding calcium hydroxide with the polyether rubber comprising a specific unit having a group containing a cationic nitrogen-containing aromatic heterocyclic ring and an unsaturated oxide monomer unit in a specific proportion. According to the cross-linkable rubber composition according to the present invention, an advantageous effect of preventing forming defects in die forming, extrusion forming, or the like can be attained by increasing the Mooney scorching time ($t_5$), and an advantageous effect of reducing cross-linking unevenness of articles after cross-linking can be attained by increasing the Mooney scorching time ($t_{35}$).

From the comparison between Example 1 and Comparative Example 1 where the same cross-linking agent was used as a cross-linking agent, it can be verified that use of calcium hydroxide results in a reduction in electrical resistance value of the resulting cross-linked rubber as well as an improvement in scorching stability, compared to the use of zinc oxide. Such effects can be also verified by comparison between Example 3 and Comparative Example 2 where the same cross-linking agent was used as a cross-linking agent.

## Claims

1. A cross-linkable rubber composition comprising a polyether rubber, a cross-linking agent, and calcium hydroxide, the polyether rubber comprising 0.1 to 30 mol % of a unit represented by the following general formula (1) and 1 to 15 mol % of an unsaturated oxide monomer unit:

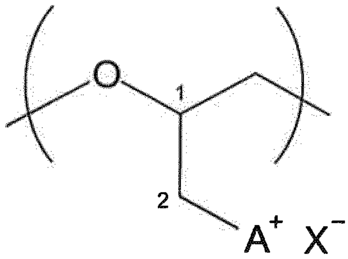

(1)

wherein $A^+$ is a group containing a cationic nitrogen-containing aromatic heterocyclic ring; the group containing a cationic nitrogen-containing aromatic heterocyclic ring bonds to a carbon atom at a position "2" shown in the above general formula (1) through one of nitrogen atoms constituting the cationic nitrogen-containing aromatic heterocyclic ring; and $X^-$ is any counter anion.

2. The cross-linkable rubber composition according to claim 1, wherein the group containing a cationic nitrogen-containing aromatic heterocyclic ring represented by $A^+$ in the above general formula (1) is a group represented by the following general formula (2):

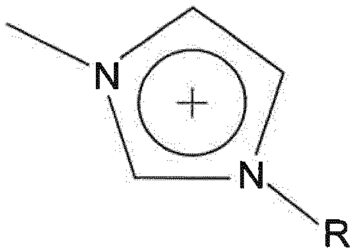

(2)

wherein N- shown in general formula (2) bonds to the carbon atom at the position "2" shown in the above general formula (1); and R shown in the above general formula (2) represents a hydrogen atom or a hydrocarbon group having 1 to 20 carbon atoms.

3. The cross-linkable rubber composition according to claim 1 or 2, wherein the polyether rubber further comprises an epihalohydrin monomer unit.

4. The cross-linkable rubber composition according to any one of claims 1 to 3, wherein the polyether rubber further comprises an ethylene oxide monomer unit.

5. The cross-linkable rubber composition according to any one of claims 1 to 4, wherein the cross-linking agent is a sulfur-containing compound.

6. The cross-linkable rubber composition according to any one of claims 1 to 5, wherein a content of the calcium hydroxide is 0.01 to 15 parts by weight with respect to 100 parts by weight of the polyether rubber.

7. The cross-linkable rubber composition according to any one of claims 1 to 6, wherein a Mooney viscosity (ML1+4, 100°C) is 10 to 53.

8. The cross-linkable rubber composition according to any one of claims 1 to 7, prepared by adding and kneading the cross-linking agent and the calcium hydroxide to and with the polyether rubber.

9. A method of producing the cross-linkable rubber composition according to any one of claims 1 to 8, comprising:

a step of preparing the polyether rubber; and
a step of adding and kneading the cross-linking agent and the calcium hydroxide to and with the polyether rubber.

**10.** A cross-linked rubber prepared by cross-linking the cross-linkable rubber composition according to any one of claims 1 to 8.

**11.** A conductive member comprising the cross-linked rubber according to claim 10.

**INTERNATIONAL SEARCH REPORT**

International application No. PCT/JP2017/033712

A. CLASSIFICATION OF SUBJECT MATTER
Int.Cl. C08L71/03(2006.01)i, C08G65/333(2006.01)i, C08K3/22(2006.01)i, H01B1/12(2006.01)i, F16C13/00(2006.01)n

According to International Patent Classification (IPC) or to both national classification and IPC

B. FIELDS SEARCHED

Minimum documentation searched (classification system followed by classification symbols)
Int.Cl. C08L1/00-101/16, C08G65/333, C08K3/00-13/08, H01B1/12, F16C13/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model specifications of Japan | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2015/099027 A1 (NIPPON ZEON CO., LTD.) 02 July 2015, entire text & US 2017/0029564 A1, entire text & EP 3088439 A1 | 1-11 |
| A | JP 2013-227432 A (NIPPON ZEON CO., LTD.) 07 November 2013, entire text (Family: none) | 1-11 |
| A | JP 2013-209434 A (NIPPON ZEON CO., LTD.) 10 October 2013, entire text (Family: none) | 1-11 |
| A | JP 2005-097414 A (DAISO CO., LTD.) 14 April 2005, entire text (Family: none) | 1-11 |
| A | WO 2011/108599 A1 (DAISO CO., LTD.) 09 September 2011, entire text & US 2012/0322916 A1, entire text & EP 2546304 A1 | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 December 2017 (18.12.2017) | 26 December 2017 (26.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014070137 A
- JP 50033271 A
- JP 51069434 A
- JP 52042481 A
- JP 46027534 A
- JP 56051171 A
- JP 432945 A
- JP 457751 A
- JP 363394 A
- JP 3223978 B